(19) Europäisches Patentamt
European Patent Office
Office européen des brevets

(11) EP 2 243 586 B1

(12) **EUROPÄISCHE PATENTSCHRIFT**

(45) Veröffentlichungstag und Bekanntmachung des Hinweises auf die Patenterteilung:
**02.07.2014 Patentblatt 2014/27**

(51) Int Cl.:
*B25J 9/16* *(2006.01)* *B23K 11/25* *(2006.01)*
*B23K 11/31* *(2006.01)*

(21) Anmeldenummer: **10003621.9**

(22) Anmeldetag: **31.03.2010**

(54) **Verfahren und Kontrollvorrichtung zum Schweißen mittels einer Positioniervorrichtung**

Method and device for controlling a positioning device for welding

Procédé et dispositif de commande d'un dispositif de positionnement destiné au soudage

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **22.04.2009 DE 102009018403**
**14.10.2009 DE 102009049327**
**14.10.2009 DE 102009049329**

(43) Veröffentlichungstag der Anmeldung:
**27.10.2010 Patentblatt 2010/43**

(73) Patentinhaber: **KUKA Roboter GmbH**
**86165 Augsburg (DE)**

(72) Erfinder:
• **Stimmel, Burkhard**
**82547 Achmühle (DE)**
• **Jacob, Dirk, Dr.**
**86399 Bobingen (DE)**

(74) Vertreter: **Schlotter, Alexander Carolus Paul et al**
**Wallinger Ricker Schlotter Tostmann**
**Patent- und Rechtsanwälte**
**Zweibrückenstrasse 5-7**
**80331 München (DE)**

(56) Entgegenhaltungen:
**WO-A1-2005/075157 US-A- 4 484 056**
**US-A- 5 988 486**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren und eine Kontrollvorrichtung zum Schweißen mittels eines Schweißroboters.

Beim Widerstandspunktschweißen (WPS) werden beispielsweise zu fügende Bleche durch zwei Schweißelektroden zusammengepresst und ein Schweißstrom durch die Elektroden und Bleche geleitet, wobei durch den erhöhten Übergangswiderstand zwischen den Blechen deren Temperatur so weit erhöht wird, dass die Bleche dort verschmelzen.

Wird dies automatisiert durch eine Positioniervorrichtung wie beispielsweise einen Schweißroboter ausgeführt, so fährt diese positionsgeregelt vorgegebene Posen an, um Schweißzange und Werkstück(e) relativ zueinander zu positionieren. Hierzu kann die Positioniervorrichtung das Werkstück und/oder die Schweißzange bewegen. Beispielsweise kann ein Schweißroboter eine robotergeführte Schweißzange an einem feststehenden Werkstück ansetzen oder umgekehrt ein gegriffenes Werkstück einer stationären Schweißzange zuführen.

Bei der Anfahrt und/oder in der Schweißpose wird durch Bewegung wenigstens einer Elektrode zur anderen Elektrode hin die Schweißzange geschlossen und ein Schweißpunkt erzeugt. Die Posen zum Setzen der Schweißpunkte können beispielsweise vorab durch manuelles Anfahren geteacht oder offline, beispielsweise auf Basis bekannter Werkstück- und Fertigungszellendaten, programmiert und zum Beispiel durch Proportional-Integral-Differential-Einzelgelenkregler angefahren werden.

Weicht nun im Betrieb die Position, i.e. Lage und/oder Orientierung, eines zu schweißenden Werkstücks relativ zu einem Werkzeugreferenzsystem der Positioniervorrichtung wie zum Beispiel dem TCP ("tool center point") eines Schweißroboters von der Position ab, bezüglich der die Pose vorgegeben wurde, da beispielsweise Bleche verformt oder ungenau in einem Zubringwerkzeug eingespannt oder Zubringwerkzeug und Positioniervorrichtung ungenau zueinander positioniert sind, versucht die Positionsregelung gewaltsam, die Referenzposition zu erreichen. Dadurch kann es, insbesondere bei hoch- und höchstfesten Blechen, zu einer Verschlechterung bzw. einem Versagen des Schweißprozesses, einer Beschädigung von Werkstück, Werkzeug und/oder Positioniervorrichtung und dergleichen kommen.

Daher werden in der Praxis bisher schwimmend gelagerte Schweißzangen vorgesehen, die die Schweißzange während des Schweißvorgangs von Querkräften entkoppeln. Insbesondere bei nicht stationären, geführten Schweißzangen muss zum Anfahren der nächsten Pose dieser sogenannte Zangenausgleich fixiert werden, um die Schweißzange präzise positionieren zu können. Dies bedingt schwere, aufwändige, energieverbrauchende und fehleranfällige Mechaniken.

Aus der WO 2005/075157 A1 ist ein Verfahren nach dem Oberbegriff des Anspruchs 1 bekannt, wobei ein Schweißroboter während des Einrichtens oder nach Bedarf mit einer Elektrode einer geöffneten Schweißzange vorab einen touch-up mit dem Werkstück ausführt, die dabei gefundene Kontaktposition auf eine Soll-Anfahrtbahn projiziert und diese anschließend steif positionsgeregelt abfährt. Diese Lösung ist insbesondere bei häufig wechselnden Toleranzen, die einen wiederholten touch-up für jedes Werkstück erfordern würden, nachteilig.

Die US 4,484,056 B schlägt für ein Mikroschweißen mit einer stationären Schweißzange vor, eine Elektrode im letzten Wegstück kraftgeregelt an ein Werkstück heranzufahren, um den Kontaktimpuls zu reduzieren. Eine Positionierung der Schweißzange als Ganzes durch einen Roboter geht daraus nicht hervor.

Aus der US 5,988,486 A ist eine robotergeführte Schweißzange bekannt. Um Positionierungsfehler des Roboters zu kompensieren, wird ein Antrieb einer beweglichen Elektrode der Zange so geregelt, dass eine Differenz zwischen einer Kraft auf die stationäre Elektrode und einer Kraft auf die bewegliche Elektrode im Wesentlichen zu Null wird. Positionierungsfehler des Roboters werden somit durch die Schweißzange selber kompensiert.

Aus der EP 1 016 490 B1 ist ein Schweißverfahren bekannt, das durch einen Schweißroboter durchgeführt wird, dessen Roboterarm so geregelt wird, dass sich das Ende des Roboterarms mit einer externen Kraft lediglich in der Richtung bewegt, in der sich die Elektrode der beweglichen Seite bewegt.

Aufgabe der vorliegenden Erfindung ist es, das automatisierte Schweißen zu verbessern.

Diese Aufgabe wird durch ein Verfahren mit den Merkmalen des Anspruchs 1 gelöst. Anspruch 11 stellt eine Vorrichtung, Anspruch 12 bzw. 13 ein Computerprogramm bzw. ein Computerprogrammprodukt, insbesondere einen Datenträger bzw. ein Speichermedium, zur Durchführung eines Verfahrens nach Anspruch 1 unter Schutz. Die Unteransprüche betreffen vorteilhafte Weiterbildungen.

Die vorliegende Erfindung sieht vor, mit einem Schweißroboter eine oder mehrere Schweißposen geregelt anzufahren. Dabei wird unter einer Regelung insbesondere die Bestimmung und Ausgabe von Stellgrößen, etwa Soll-Antriebskräften und/oder-momenten, Strömen, Leistungen oder dergleichen, von Antriebseinheiten des Schweißroboters wie beispielsweise Elektromotoren verstanden, die auf Basis rückgeführter Ist-Größen, insbesondere Posen, Gelenkpositionen und/oder Gelenkgeschwindigkeiten, erfolgt. Beispielsweise kann hierzu eine Einzelgelenkregelung, etwa eine PID-Regelung, vorgesehen sein, die Stellgrößen proportional zu einer Regeldifferenz zwischen Soll- und Ist-Gelenkpositionen und/oder Zeitableitungen und/oder -integralen hiervon bestimmt. Die Regelung kann gleichermaßen im kartesischen Raum durch Vergleich von Soll- und Ist-Position (bzw. deren zeitlichen Ableitungen und/oder Integralen) und/oder modellbasiert erfolgen.

Erfindungsgemäß wird nun softwaretechnisch eine angefahrene Schweißpose des Schweißroboters während des Schließens einer Schweißzange und/oder während des Schweißvorgangs, vorzugsweise auch während des Öffnens der Schweißzange, nachfolgend zusammenfassend als Aktivierung der Schweißzange bezeichnet, nachgiebig gehalten. Der solcherart in seiner Kontrolle "weich" geschaltete Schweißroboter kann dann Reaktionskräften, die aufgrund von Fehlpositionierungen beim Anfahren des Werkstückes auf die Schweißzange wirken, durch Änderung seiner Pose nachgeben und sich so bezüglich der tatsächlichen Werkstückposition justieren, so dass ein aufwändiger mechanischer Zangenausgleich entfallen kann, der bislang zwischen dem steif positionsgeregelt in seiner Referenzpose verharrenden Schweißroboter und dem versetzten Werkstück ausgleicht.

In einer vorteilhaften Ausführung kann hierzu die Schweißpose gesteuert gehalten werden. Dabei wird unter einer Steuerung im Gegensatz zur oben erläuterten Regelung insbesondere die Bestimmung und Ausgabe von Stellgrößen unabhängig von Ist-Größen, insbesondere Gelenkpositionen verstanden.

Hierzu kann in einer bevorzugten Ausführung der vorliegenden Erfindung eine Positionsregelung, mit der die Schweißpose präzise angefahren wird, beim Schließen der Schweißzange, während des Schweißvorgangs und/oder beim Öffnen der Schweißzange unterdrückt werden, beispielsweise, indem Regeldifferenzen zu Null gesetzt bzw. Soll-Größen auf Ist-Größen gesetzt werden, so dass keine Schleppfehler vorliegen. Weist die Positionsregelung eine Vorsteuerung auf, kann diese weiterhin aktiv bleiben. Vorzugsweise kann zwischen einer Regelung mit und einer Steuerung ohne Berücksichtigung rückgeführter Posen bzw. Positionen des Schweißroboters umgeschaltet werden.

In einer bevorzugten Ausführung kann die Steuerung vorbestimmte Kräfte, insbesondere Gewichtskräfte, kompensieren, die beispielsweise auf den Schweißroboter wirken, indem beispielsweise die hierzu erforderlichen Stellgrößen, etwa Antriebskräfte bzw. -momente, Ströme oder dergleichen vorab bestimmt, abgespeichert und während der Aktivierung der Schweißzange zur Ansteuerung der Aktuatoren des Schweißroboters verwendet werden.

Auch eine Steuerung, insbesondere Positionssteuerung, im Sinne der vorliegenden Erfindung kann noch eine untergeordnete Regelschicht, etwa in Form eines Stromreglers oder dergleichen aufweisen, die Unterscheidung zwischen (Positions)Regelung und (Positions)Steuerung bezieht sich insofern insbesondere darauf, ob Pose bzw. Gelenkpositionen des Schweißroboters rückgeführt und berücksichtigt werden (Regelung) oder nicht (Steuerung).

Wird, spätestens beim oder nach dem Öffnen der Schweißzange, wieder auf die Positionsregelung umgeschaltet, um die nächste Schweißpose anzufahren, kann die aktuelle Ist-Pose des Schweißroboters aufgrund seines Nachgebens während der Aktivierung der Schweißzange derart von der angefahrenen Soll-Pose abweichen, dass ein abruptes Umschalten zu einem Sprung in der Regelabweichung und somit zu einer Schwingungsanregung oder einem Ansprechen einer Schleppfehlerüberwachung führt. Daher wird erfindungsgemäß nach dem nachgiebigen Halten der Schweißpose zunächst, vorzugsweise für einen vorgegebenen Zeitraum, die aktuelle Pose beim Beenden des Schließens oder Öffnens der Schweißzange oder des Schweißvorganges als Soll-Pose einer Regelung verwendet.

Wenn während des nachgiebigen Haltens der Schweißpose die Positionsregelung nicht sicherstellt, dass der Schweißroboter seine Schweißpose, wenigstens näherungsweise, hält, kann in einer bevorzugten Ausführung während des nachgiebigen Haltens der Schweißpose die aktuelle Pose überwacht werden. Wird die Differenz zwischen dieser aktuellen Pose und der angefahrenen, theoretisch zu haltenden Schweißpose zu groß, kann eine entsprechende Reaktion erfolgen, insbesondere ein Halt, vorzugsweise Nothalt des Schweißroboters.

An Stelle einer Unterdrückung der Positionsregelung, unter der, wie vorstehend erläutert, insbesondere eine kartesische, Posen- bzw. Gelenkpositionsregelung verstanden wird, kann diese auch entsprechend modifiziert werden, um während der Aktivierung der Schweißzange die Schweißpose nachgiebig zu halten. Beispielsweise können hierzu Stellgrößenbeschränkungen, etwa Maximalwerte, auf die Antriebskräfte und/oder -momente begrenzt werden, entsprechend reduziert werden, so dass der Schweißroboter einer Verschiebung aus seiner angefahrenen Schweißpose aufgrund des Kontakts mit dem versetzten Werkstück nur noch diese verringerten Maximalwerte entgegensetzt. Vorzugsweise erfolgt dies für alle Bewegungsachsen des Schweißroboters. Gleichermaßen ist es möglich, eine Kraftregelung zu verwenden, insbesondere von Positions- auf Kraftregelung umzuschalten, wobei Soll-Kraftwerte der Kraftregelung während der Aktivierung der Schweißzange entsprechend niedrig vorgegeben werden. Es kann auch genügen, den Integral-Anteil einer PI(D)-Regelung zu reduzieren oder zu eliminieren, da der Schweißroboter dann einem Ausweichen aufgrund des Kontakts mit einem versetzten Werkstück nur eine Kraft entgegensetzt, die proportional zu diesem Versatz ist, jedoch mit verbleibendem Versatz nicht bzw. nur wenig anwächst.

Weitere Vorteile und Merkmale ergeben sich aus den Unteransprüchen und den Ausführungsbeispielen. Hierzu zeigt, teilweise schematisiert:

Fig. 1:    einen Schweißroboter mit einer Kontrollvorrichtung nach einer Ausführung der vorliegenden Erfindung; und

Fig. 2: ein durch die Kontrollvorrichtung nach Fig. 1 ausgeführtes Verfahren zum Schweißen mittels des Schweißroboters.

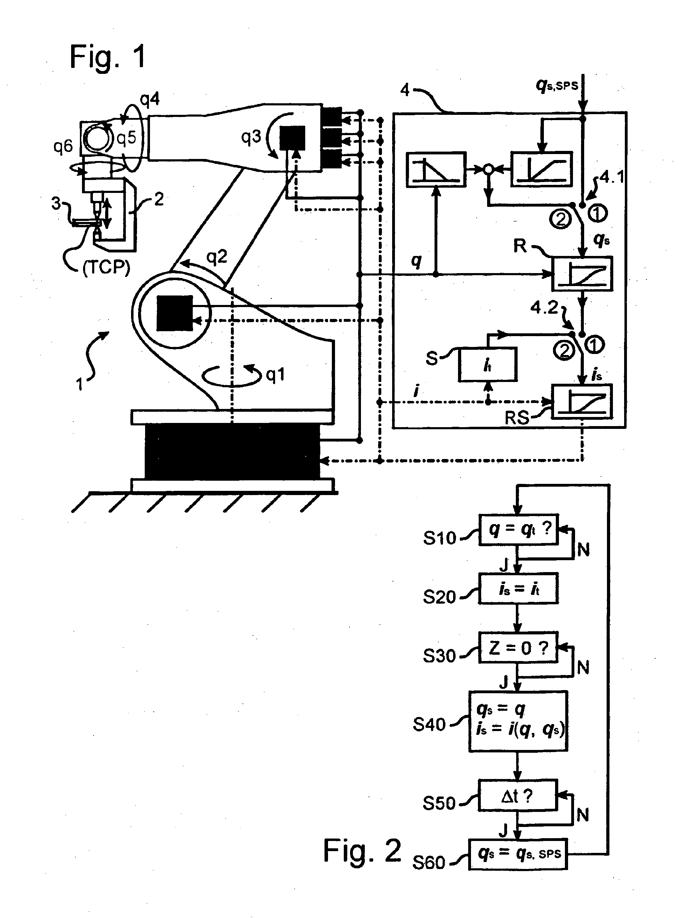

Fig. 1 zeigt einen sechsachsigen Schweißroboter 1 mit einer Schweißzange 2 beim Punktschweißen eines zweilagigen Werkstückes 3.

Eine Kontrollvorrichtung 4 erfasst die Gelenk- bzw. Motorwinkel $q$ = (q1,...,q6) des Knickarmroboters 1 (ausgezogen in Fig. 1) und gibt Soll-Motorströme $i_s$ an die Antriebsmotoren aus (strichpunktiert in Fig. 1).

Zum Anfahren einer Schweißpose, wie sie exemplarisch in Fig. 1 dargestellt ist, erhält ein Regler R der Kontrollvorrichtung 4 Soll-Gelenkwinkel $q_{s,SPS}$, die er mit den erfassten Ist-Gelenkwinkeln $q$ vergleicht und aus dieser Regeldifferenz eine entsprechende Stellgröße ableitet, die in einem Stromregler RS, der die Ist-Motorströme $i$ erfasst, in entsprechende Soll-Motorströme $i_s$ umgewandelt wird. Zusätzlich oder alternativ zu den Gelenkwinkeln können auch Gelenkwinkelgeschwindigkeiten oder andere zeitliche Ableitungen und/oder Integrale der Gelenkwinkeln verwendet werden, um beispielsweise eine PID-Positionsregelung zu realisieren. Gleichermaßen können anstelle der Gelenkwinkel auch kartesische Positionen des Werkzeugreferenzsystems TCP verwendet werden, die durch Vorwärts- bzw. Rückwärtstransformation aufeinander abgebildet werden können (nicht dargestellt). Entsprechend sind zum Anfahren einer Schweißpose Umschalteinrichtungen 4.1, 4.2 jeweils in der Stellung "①".

Hat der Roboter die geteachte Schweißpose $q_t$ angefahren (Fig. 2: S10: "J"), schaltet die Umschalteinrichtung 4.2 in Schritt S20 in die in Fig. 1 dargestellte Stellung "②" um. Dadurch wird der Positionsregler R unterdrückt, der Stromregler RS erhält als Stellgröße nur noch einen abgespeicherten Soll-Wert $i_t$. Dieser entspricht beispielsweise dem Stromwert beim Umschalten auf die Positionssteuerung, i.e. dem Strom, den die Motoren zum Halten der angefahrenen Schweißpose gegen Gewichts-, Reibungs- und andere Kräfte, i.e. ohne Kontaktkräfte vom Werkstück 3 auf die Schweißzange 2 benötigen.

Damit wird die Schweißpose gesteuert und somit nachgiebig gehalten, da die Stellgröße für den Stromregler RS nicht mehr von dem Positionsregler R in Abhängigkeit der Ist-Pose, sondern unabhängig von dieser von der Steuerung S auf Basis des vorbestimmten Stromwertes bestimmt wird. Gewichts- und andere eingeprägte Kräfte werden dabei durch diese Steuerung näherungsweise kompensiert, so dass die Pose des Roboters mit entsprechend geringen äußeren Kräften verändert werden kann.

Nun wird die Zange 2 aktiviert (S30: Z = 1), i.e. die bewegliche Elektrode zugefahren, der Schweißstrom aktiviert und anschließend die Zange wieder geöffnet. Sobald die Aktivierung der Zange beendet ist (S30: "J"), schaltet die Umschalteinrichtung 4.2 in Schritt S40 wieder in die Stellung "①", so dass der Roboter wieder in Positionsregelung geht.

Hat sich dabei seine Pose durch ein Nachgeben beim Aktivieren der Schweißzange gegenüber der ursprünglich unter Positionsregelung angefahrenen Pose verändert, würde die abrupte Vorgabe dieser ursprünglich angefahrenen Pose zu einem großen Schleppfehler mit entsprechenden Regelproblemen führen.

Daher wird zum Umschalten auf die Positionsregelung (4.2 ②→①) eine aktuelle Pose $q$ als Soll-Pose $q_s$ der Regelung verwendet. Hierzu schaltet in Schritt S40 die Umschalteinrichtung 4.1 in die Stellung "②" um. In dieser wird über eine vorgegebene Zeit Δt die Soll-Pose $q_s$, die dem Regler R zugeführt wird, von der beim Umschalten aktuellen Pose $q$ auf die ursprünglich unter Positionsregelung angefahrenen Pose $q_{s, SPS}$ geführt, beispielsweise gemäß

$$q_s = q \times (\Delta t - t)/\Delta t + q_{s, SPS} \times t/\Delta t$$

$$\Rightarrow q_s(t=0) = q \; ; \; q_s(t=\Delta t) = q_{s, SPS}$$

Hat die Soll-Pose $q_s$ der Regelung nach Δt die ursprünglich unter Positionsregelung angefahrenen Pose $q_{s, SPS}$ erreicht (S50: "J"), kann die Umschalteinrichtung 4.1 in Schritt S60 wieder auf die Positionsregelung umschalten.

Die Kontrollvorrichtung 4 überwacht während der Aktivierung der Schweißzange 2 permanent die Abweichung zwischen der aktuellen Pose $q$ und der ursprünglich angefahrenen Pose $q_{s, SPS}$ und löst einen Nothalt aus, wenn diese einen vorgegebenen Maximalwert überschreitet (nicht dargestellt).

Bezugszeichenliste

| | | |
|---|---|---|
| 1 | Roboter | |
| 2 | Schweißzange | |
| 3 | Werkstücke (Bleche)/Referenzkonfiguration | |
| 4 | Kontrollvorrichtung | |
| R | Positionsregler | |
| RS | Stromregler | |
| S | Positionssteuerung | |
| $q$ | aktuelle Pose (Gelenkwinkel) | |
| $q_s$ | Soll-Pose | |
| $q_{s, SPS}$ | Schweiß-Soll-Pose | |

**Patentansprüche**

1. Verfahren zum automatisierten Schweißen mittels einem Schweißroboter (1) wobei eine Schweißpose ($q_t$) geregelt angefahren wird;
**dadurch gekennzeichnet, dass**

die Schweißpose während des Schließens einer Schweißzange (2) und/oder während des Schweißvorgangs nachgiebig gehalten wird (S20), wobei der in seiner Kontrolle weich geschaltete Schweißroboter Reaktionskräften, die aufgrund von Fehlpositionierungen beim Anfahren eines Werkstückes (3) auf eine Schweißzange (2) wirken, durch Änderung seiner Pose nachgeben und sich so bezüglich der tatsächlichen Werkstückposition justieren kann; und nach dem nachgiebigem Halten der Schweißpose eine aktuelle Pose ($q$) als Soll-Pose ($q_s$) einer Regelung verwendet wird (S40).

2. Verfahren nach Anspruch 1, **dadurch gekennzeichnet, dass** die Schweißpose während des Schließens der Schweißzange (2) und/oder während des Schweißvorgangs gesteuert gehalten wird (S20).

3. Verfahren nach Anspruch 2, **dadurch gekennzeichnet, dass** das gesteuerte Halten der Schweißpose unabhängig von Gelenkpositionen ($q$) und/oder Gelenkgeschwindigkeiten (d$q$/dt) erfolgt.

4. Verfahren nach einem der vorhergehenden Ansprüche 2 bis 3, **dadurch gekennzeichnet, dass** die Steuerung während des Schließens der Schweißzange (2) und/oder während des Schweißvorgangs vorbestimmte Kräfte, insbesondere Gewichtskräfte ($i_t$), kompensiert.

5. Verfahren nach einem der vorhergehenden Ansprüche, **dadurch gekennzeichnet, dass** zum geregelten Anfahren der Schweißpose Gelenkpositionen ($q$) und/oder Gelenkgeschwindigkeiten (d$q$/dt) rückgeführt werden.

6. Verfahren nach einem der vorhergehenden Ansprüche, **dadurch gekennzeichnet, dass** die Schweißpose während des Öffnens der Schweißzange nachgiebig gehalten wird (S20).

7. Verfahren nach Anspruch 6, **dadurch gekennzeichnet, dass** die Schweißpose während des Öffnens der Schweißzange gesteuert gehalten wird (S20).

8. Verfahren nach Anspruch 7, **dadurch gekennzeichnet, dass** das gesteuerte Halten der Schweißpose unabhängig von Gelenkpositionen ($q$) und/oder Gelenkgeschwindigkeiten (d$q$/dt) erfolgt.

9. Verfahren nach einem der vorhergehenden Ansprüche 6 bis 8, **dadurch gekennzeichnet, dass** die Steuerung während des Öffnens der Schweißzange vorbestimmte Kräfte, insbesondere Gewichtskräfte ($i_t$), kompensiert.

10. Verfahren nach einem der vorhergehenden Ansprüche, **dadurch gekennzeichnet, dass** während des nachgiebigen Haltens der Schweißpose eine aktuelle Pose überwacht wird.

11. Kontrollvorrichtung (4) für einen Schweißroboter (1) zum Schweißen mit einer Schweißzange (2), wobei die Vorrichtung einen Regler (R) zum geregelten Anfahren einer Schweißpose ($q_t$) aufweist, **gekennzeichnet durch** eine Umschalteinrichtung (4.1, 4.2) zur Durchführung eines Verfahrens nach einem der vorhergehenden Ansprüche.

12. Computerprogramm, dass ein Verfahren nach einem der Ansprüche 1 bis 10 ausführt, wenn es in einer Vorrichtung nach Anspruch 11 abläuft.

13. Computerprogrammprodukt mit Programmcode, der auf einem maschinenlesbaren Träger gespeichert ist und ein Computerprogramm nach Anspruch 12 umfasst.

**Claims**

1. A method for automated welding using a welding robot (1), wherein a welding pose ($q_t$) is moved to in a feedback-controlled way;
**characterized in that**
the welding pose is held compliant during the closing of a welding gun (2) and/or during the welding operation (S20), wherein the welding robot, which is switched in a compliant state in its control, can give in to reaction forces, which apply to the welding gun (2) due to faulty positioning during the moving to a workpiece (3), by changing its pose and by this adjust itself relative to the actual workpiece position; and after the compliant holding of the welding pose an actual pose ($q$) is used as nominal pose ($q_s$) of a feedback control (S40).

2. A method according to claim 1, **characterized in that** the welding pose is held in a feedforward controlled way during the closing of the welding gun (2) and/or during the welding operation (S20).

3. A method according to claim 2, **characterized in that** the feedforward controlled holding of the welding pose is performed independently of joint positions ($q$) and/or joint velocities (d$q$/dt).

4. A method according to one of the preceding claims 2 to 3, **characterized in that** the control compensates predefined forces during the closing of the welding gun (2) and/or during the welding operation, in particular gravity-related forces ($i_t$).

5. A method according to one of the preceding claims, **characterized in that** for feedback-controlled moving to the welding pose joint positions (*q*) and/or joint velocities (d*q*/dt) are fed back.

6. A method according to one of the preceding claims, **characterized in that** the welding pose is held compliant during the opening of the welding gun (S20).

7. A method according to claim 6, **characterized in that** the welding pose is held in a feedforward controlled way during the opening of the welding gun (S20).

8. A method according to claim 7, **characterized in that** the feedforward controlled holding of the welding pose is performed independently of joint positions (*q*) and/or joint velocities (d*q*/dt).

9. A method according to one of the preceding claims 6 to 8, **characterized in that** the control compensates predefined forces during the opening of the welding gun, in particular gravity-related forces ($i_t$).

10. A method according to one the preceding claims, **characterized in that** during the compliant holding of the welding pose an actual pose is monitored.

11. A control device (4) for a welding robot (1) for welding with a welding gun (2), wherein the device comprises a controller (R) for feedback-controlled moving to a welding pose ($q_t$), **characterized by** a switching means (4.1, 4.2) for carrying-out a method according to one of the preceding claims.

12. A computer program that performs a method according to one of the preceding claims 1 to 10 if it runs in a device according to claim 11.

13. A computer program product with program code that is stored on a machine-readable carrier and that comprises a computer program according to claim 12.

**Revendications**

1. Procédé de soudage automatisé au moyen d'un robot de soudage (1), une pose de soudage ($q_t$) étant amenée de façon réglée ;
**caractérisé en ce que**
la pose de soudage est maintenue de manière flexible pendant la fermeture d'une pince à souder (2) et/ou pendant l'opération de soudage, le robot de soudage, dont le contrôle présente un montage souple, pouvant fléchir par modification de sa pose et s'aligner par rapport à la position réelle de la pièce, du fait de forces de réaction, lesquelles agissent sur une pince à souder (2) en raison de mauvais positionnements lors de l'amenée d'une pièce (3) ; et après le maintien flexible de la pose de soudage, une pose actuelle (q) est utilisée comme pose théorique ($q_s$) d'un réglage (S40).

2. Procédé selon la revendication 1, **caractérisé en ce que** la pose de soudage est maintenue commandée pendant la fermeture de la pince à souder (2) et/ou pendant l'opération de soudage (S20).

3. Procédé selon la revendication 2, **caractérisé en ce que** le maintien commandé de la pose de soudage s'effectue indépendamment des positions d'articulation (q) et/ou des vitesses d'articulation (dq/dt).

4. Procédé selon l'une des revendications 2 à 3, **caractérisé en ce que** la commande compense les forces prédéfinies pendant la fermeture de la pince à souder (2) et/ou pendant l'opération de soudage, en particulier les poids ($i_t$).

5. Procédé selon l'une des revendications précédentes, **caractérisé en ce que** pour l'amenée réglée de la pose de soudage, les positions d'articulation (q) et/ou les vitesses d'articulation (dq/dt) sont asservies.

6. Procédé selon l'une des revendications précédentes, **caractérisé en ce que** la pose de soudage est maintenue de manière flexible pendant l'ouverture de la pince à souder (S20).

7. Procédé selon la revendication 6, **caractérisé en ce que** la pose de soudage est maintenue commandée pendant l'ouverture de la pince à souder (S20).

8. Procédé selon la revendication 7, **caractérisé en ce que** le maintien commandé de la pose de soudage s'effectue indépendamment des positions d'articulation (q) et/ou des vitesses d'articulation (dq/dt).

9. Procédé selon l'une des revendications 6 à 8, **caractérisé en ce que** la commande compense des forces prédéfinies pendant l'ouverture de la pince à souder, en particulier des poids ($i_t$).

10. Procédé selon l'une des revendications précédentes, **caractérisé en ce qu'**une pose actuelle est surveillée pendant le maintien flexible de la pose de soudage.

11. Dispositif de contrôle (4) pour un robot de soudage (1) permettant un soudage au moyen d'une pince à souder (2), le dispositif comprenant un régulateur (R) permettant l'amenée réglée d'une pose de soudage (qt), **caractérisé par** un dispositif de commutation (4.1, 4.2) permettant de mettre en oeuvre un procédé selon l'une des revendications précédentes.

**12.** Programme informatique exécuté par un procédé selon l'une des revendications 1 à 10, lorsqu'il se déroule dans un dispositif selon la revendication 11.

**13.** Produit-programme informatique pourvu d'un code de programme, lequel est mis en mémoire sur un support lisible par ordinateur et comprend un programme informatique selon la revendication 12.

Fig. 1

q4

q5

q6

q3

3

2

(TCP)

q2

q1

1

4

$q_{s,SPS}$

4.1

②  ①

$q_s$

$q$

R

4.2

②  ①

$i_s$

S

$i_t$

$i$

RS

S10  $q = q_t$ ?  N

J

S20  $i_s = i_t$

S30  Z = 0 ?  N

J

S40  $q_s = q$
$i_s = i(q, q_s)$

S50  Δt ?  N

J

Fig. 2  S60  $q_s = q_{s,SPS}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005075157 A1
- US 4484056 B
- US 5988486 A
- EP 1016490 B1